# EUROPEAN PATENT SPECIFICATION

(11) **EP 1 064 236 B1**
(45) Date of publication and mention of the grant of the patent: **21.08.2002**
(21) Application number: 99911944.9
(22) Date of filing: 24.03.1999
(51) Int. Cl.: C04B 24/14

(54) **READY MADE CEMENTITIOUS COMPOSITION**
GEBRAUCHSFERTIGE ZEMENTZUSAMMENSETSUNG
COMPOSITION DE GYPSE

(30) Priority: 24.03.1998 GB 9806314; 15.06.1998 GB 9812929; 29.09.1998 GB 9821152
(43) Date of publication of application: 03.01.2001
(73) Proprietor: BPB plc, Slough, Buckinghamshire SL1 3UF (GB)
(72) Inventor: O'KEEFE, Samantha Jane, Nuneaton, Warks CV13 0EP (GB); FREEGARD, Graham John, Colston Bassett, Notts NG12 3FB (GB)
(74) Representative: Marlow, Nicholas Simon
(86) International application number: GB9900926
(87) International publication number: WO99048833

(56) References cited:
- DE-A- 3 314 475
- DE-A- 3 427 741
- DE-A- 19 610 270
- GB-A- 1 065 081
- GB-A- 2 121 811
- US-A- 2 790 724
- US-A- 3 544 344
- US-A- 5 076 852
- US-A- 5 653 797
- PATENT ABSTRACTS OF JAPAN vol. 095, no. 005, 30 June 1995 (1995-06-30) & JP 07 048158 A (NIPPON ZEON CO LTD), 21 February 1995 (1995-02-21)

## Description

The present invention relates to a cementitious composition which is relatively stable when mixed with water and which can be induced to set and harden when an accelerator is mixed into the composition. Such compositions are useful in a variety of applications, including as joint compounds for finishing joints between adjacent gypsum wallboards.

Interior walls are commonly constructed using gypsum plasterboard panels. An interior wall is made by securing the plasterboard to a support structure. The joints between the wallboard panels are then concealed using a joint compound. Typically, a wetted joint compound is embedded in the joint together with a paper reinforcing tape and the joint compound is then allowed to dry. After the joint compound has dried, a second coat of joint compound is applied, left to dry, and if necessary sanded before the wall is finished with a conventional decorative coating.

Conventional joint compounds are supplied in the form of a dry powder which is mixed with water at the work site before application to the joint or as ready mixed joint compounds which are pre-mixed with water during manufacture. Such ready mixed formulations have the advantage that they are of consistent composition, do not require water at the work site and do not take time to prepare.

Two types of joint compounds are known: drying type joint compounds and setting type joint compounds. The drying type comprise a filler, predominantly of calcium carbonate, a binder, a thickener, and other standard ingredients. These components are mixed with water prior to use and are then left to dry after application. Drying type joint compounds have the disadvantage that they are prone to shrinkage as they dry. Such shrinkage makes a level wall surface hard to achieve. Further, each coat of drying type compound must be left to dry before a subsequent coat is applied. If a coat of drying type compound is applied to an earlier coat which has not completely dried, the subsequent coat may be ruined as the previous coat shrinks underneath it.

The setting type of joint compounds comprise an inorganic binder predominantly calcium sulphate hemihydrate (calcined gypsum), a filler, an organic binder and a thickener, usually together with other standard ingredients. Conversion of the calcium sulphate hemihydrate to calcium sulphate dihydrate causes the joint compound to harden and set. This hydration takes place over a relatively short period of time. Consequently, the setting type of joint compounds are sold in powder form so that they do not set in the packaging before they can be applied to the joint. The setting type of joint compounds set and harden faster than the drying type of joint compound and are less prone to shrinkage.

Because of the advantages of setting type joint compounds over drying type joint compounds and because of the advantages of ready mixed formulations, several attempts have been made to produce setting type ready mixed joint compound formulations which have a long shelf life, which have good workability after the accelerator is added until hardening takes place, which are not prone to shrinkage and which set and harden over a short time so that the time necessary between application of successive coats is reduced.

US-A-4 661 161 describes setting type ready mixed joint compounds comprising calcium sulphate hemihydrate, a retarder comprising a proteinaceous agent and a calcium ion chelating agent and other conventional joint compound ingredients. Setting is induced with an aqueous solution of compounds having ions which have a higher log K value than calcium, such as compounds of ferric or ferrous ions or compounds of aluminium ions. Such compositions are found to have setting times which can be controlled depending on the amount of accelerator added and are disclosed to have an adequately long shelf life for commercialisation. However, it has been found that as joint compounds of this type age, they require less accelerator to achieve the same setting time, making their use unpredictable and uncontrollable. Further, the shelf life has been found to be insufficiently long, such that the joint compound is observed to set in the packaging.

EP-A-0 681 998 discloses an improved setting type ready mixed joint compound which is retarded by a non calcium-bearing phosphate (for example sodium pyrophosphate, zinc hexametaphosphate, potassium tripolyphosphate). Setting is induced with compounds having ions which have a higher log K value than calcium. The preferred accelerator is zinc sulphate. Again, the setting time is controllable depending on the amount of accelerator added.

US-A-5 653 797 discloses a setting type ready mixed joint compound retarded by a copolymer of acrylic acid and acrylamide, or a blend of the two homopolymers. Setting is accelerated using metallic salts that provide acidic cations such as aluminium, potassium, calcium or ferric sulphate, or ferric chloride. The setting time is controllable depending on the amount of accelerator added.

Many setting type ready mixed joint compounds have not been found to be commercially viable because of their relatively short shelf lives. It is desirable therefore to produce an alternative setting type ready mixed joint compound which has a longer shelf life and which has short setting times after activation with an accelerator, good workability after the accelerator is added until setting and hardening take place and good shrinkage properties.

According to a first aspect of the invention there is provided a ready mixed cementitious composition which sets when mixed with an effective amount of a setting accelerator comprising a mixture of: a cementitious material; a binder water; and a retarder comprising a polymer or a copolymer of a monomer of the formula: 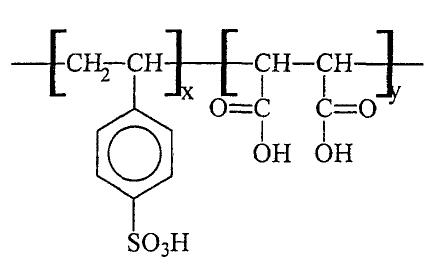 where x and y are integers and may be the same or different or a metal salt or an ionised form thereof.

According to a second aspect of the invention there is provided a ready mixed cementitious composition which sets when mixed with an effective amount of a setting accelerator comprising a mixture of: a cementitious material; water; and a retarder comprising a rosin modified maleic anhydride polymer or copolymer.

According to a third aspect of the invention there is provided a ready mixed cementitious composition which sets when mixed with an effective amount of a setting accelerator, the composition comprising a mixture of: a cementitious material; water; and a retarder comprising a polymer or copolymer of a monomer having the formula: 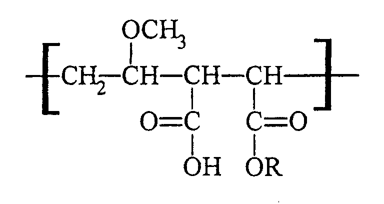 wherein R is C₄H₉ or (CH₃)₂CH.

According to a fourth aspect of the invention there is provided a ready mixed cementitious composition which sets when mixed with an effective amount of a setting accelerator, the composition comprising:
a calcium sulphate hemihydrate; water; and a retarder comprising 0.09 to 0.1% by weight plaster of a polymer or copolymer of a monomer having the formula: 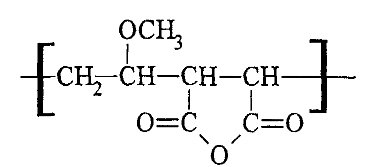 and having a molecular weight in the range of about 110 000 to about 140 000.

Preferably the cementitious material is a calcium sulphate hemihydrate, most preferably alpha calcium sulphate hemihydrate. Also preferably the polymer retarder is dissolved in isopropyl alcohol. Also preferably, the pH of the composition is at least 7.

The polymer is preferably present in the composition in an amount of about 0.5% to about 5% by weight of calcium sulphate hemihydrate in the composition. More preferably the polymer is present in the composition in an amount of about 1.4% by weight of calcium sulphate hemihydrate in the composition.

Preferred polymers for compositions according to the third aspect of the invention include Gantrez ES hydrolysed in isopropyl alcohol. A preferred source of the polymer of compositions according to the fourth aspect of the invention is Gantrez AN-119. Preferred polymers for compositions according to the second aspect of the invention include Ennesin FM-6 in isopropyl alcohol. Preferred polymers for compositions according to the first aspect of the invention include Narlex D72, a polymer of molecular weight about 15000. Calcium sulphate hemihydrate is preferably present in the composition in an amount of about 5% to about 50% by weight of the composition. More preferably the calcium sulphate hemihydrate is present in the composition in an amount of about 30% by weight of the composition.

Compositions according to the third and fourth aspects of the invention can advantageously contain a small amount of an accelerator; insufficient to cause the composition to set but sufficient to thicken it. Preferred amounts of accelerator to achieve thickening of the composition without setting are about 0.1% to 1%. Setting is achieved by addition of further accelerator.

Preferred compositions according to the invention further comprise at least one of a binder, a thickener and a filler.

The binder may be any conventional polymeric binder such as an acrylic, styrene acrylic, styrene butadiene, vinyl acetate and ethylene vinyl acetate, but is preferably ethylene vinyl acetate, preferably dispersed in water. The binder is preferably present in the composition in an amount of about 1% to about 10%, more preferably in an amount of about 1% to about 7% by weight of the composition. Most preferably the binder is present in the composition in an amount of about 4% by weight of the composition.

The thickener may be any conventional thickener for example cellulose ether, modified cellulose ether, starch, gum arabic, acrylic, urethane or polyvinyl alcohol, but is preferably cellulose ether. The thickener is preferably present in the composition in an amount of about 0.05% to about 5% by weight of the composition. More preferably the thickener is present in an amount of about 0.3% by weight of the composition.

The filler may be any conventional filler, for example perlite, limestone, dolomite, celite, silica, talc, vermiculite, glass microspheres, polymer microspheres, kaolin or wollastonite but is preferably at least one of perlite, limestone and celite, and is preferably present in an amount of about 10% to 20% by weight of the composition. When limestone is used as a filler it is preferred that it is mixed with at least one other of the preferred fillers. When perlite is used as a filler it is preferred that it is not added to the composition in excess of 12% by weight of the solid components of the composition. When limestone is present in the composition it is preferred that the amount of limestone in the composition is from about 10% to about 20% by weight of the composition. Other conventional joint compound additives may be added to the composition. These include non levelling agents such as silicas and clays and preservatives such as formaldehyde and isothiazolones.

The invention also provides a ready mixed coating system comprising separate first and second components, the first component comprising a composition according to any of the first to fourth aspects of the invention and the second component comprising a setting accelerator which when mixed with the cementitious composition induces the cementitious composition to set.

The accelerator may be any conventional accelerator but preferably comprises at least one of aluminium sulphate, zinc sulphate or iron sulphate. More preferably the accelerator comprises aluminium sulphate. The accelerator may be added in the form of a powder, an aqueous solution, or a paste. The amount of accelerator added to stimulate the setting of compositions according to the invention is preferably about 1% to about 5% by weight of the composition. More preferably the amount of accelerator added is about 2% by weight of the composition.

Also according to the invention there is provided a method for preparing a setting cementitious composition comprising admixing first and second components of the composition, the first component comprising a ready mixed cementitious composition according to any of the first to fourth aspects of the invention, and the second component being a setting accelerator, such as those described above.

The mixing of the first component with the second component can be achieved in any conventional manner. The two components can be mixed together in bulk or they may simply be brought into contact with each other, for example by being separately coated onto a surface or by being separately coated onto respective surfaces which are then brought together. If the system is used as a jointing compound, one component such as the accelerator can be applied to the tape. The other component is applied to the joint and the treated tape is placed on the filled joint. The accelerator mixes with the first component at the interface between the components to bring about the setting of the first component. The first component can also be applied to a treated tape already in position over the joint.

The invention will be further described by way of example. Example 1 is according to the first aspect of the invention; Example 2 is according to the second aspect of the invention; Examples 3 to 12 are according to the third aspect of the invention and Example 13 is according to the first and the third aspects of the invention.

### Example 1:

A ready mixed setting type joint compound was made with the following formulation:

| | **weight %** |
|---|---|
| retarder | 0.4 |
| cellulose ether | 0.3 |
| lime | 0.1 |
| calcium sulphate hemihydrate | 29.6 |
| perlite | 7.4 |
| limestone | 15.8 |
| wollastonite | 2.6 |
| kaolin | 2.6 |
| binder (ethylene vinyl acetate, 50% in water) | 4.2 |
| water | 37.0 |

The retarder was Narlex D72, the sodium salt of: 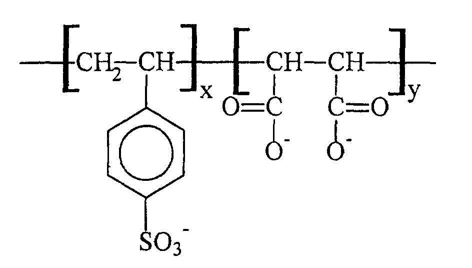 where x and y are integers and may be the same or different.

The retarder was pre-mixed with the lime and the water. The remaining components of the composition were mixed in using a high speed mixer to ensure that the mixture was homogeneous. A portion of this mixture was then removed for shelf life testing. 4% by weight of the composition of a 1.1 M solution of aluminium sulphate was then added to the remainder of the mixture to accelerate hardening and setting of the mixture. The accelerator was hand mixed or drill mixed into the composition.

The portion of the composition that was removed for shelf life testing had not set 3 months later.

### Example 2:

A ready mixed setting type joint compound was made with the following formulation:

| | **weight %** |
|---|---|
| retarder | 0.8 |
| cellulose ether | 0.3 |
| lime | 1.0 |
| calcium sulphate hemihydrate | 28.7 |
| perlite | 7.2 |
| limestone | 16.4 |
| kaolin | 5.1 |
| attapulgite clay | 0.5 |
| binder (ethylene vinyl acetate, 50% in water) | 4.1 |
| water | 35.9 |

The retarder was Ennesin FM-6.

The retarder as a 50% solution in isopropyl alcohol was pre-mixed with the lime and the water, then the remaining components of the composition were mixed in using a high speed mixer to ensure that the mixture was homogeneous. A portion of this mixture was then removed for shelf life testing. 4% by weight of the composition of a 1.1 M solution of aluminium sulphate was then added to the remainder of the mixture to accelerate hardening and setting of the mixture. The accelerator was hand mixed or drill mixed into the composition.

The portion of the composition that was removed for shelf life testing had not set 4 months later.

### Example 3:

A ready mixed setting type joint compound was made according to the following formulation:

| | **weight %** |
|---|---|
| retarder (50% in isopropyl alcohol) | 0.8 |
| cellulose ether | 0.3 |
| lime | 1.0 |
| calcium sulphate hemihydrate | 29.2 |
| perlite | 7.3 |
| limestone | 15.6 |
| celite | 5.2 |
| binder (ethylene vinyl acetate, 50% in water) | 4.2 |
| water | 36.4 |

The retarder was Gantrez ES-435, of the formula: 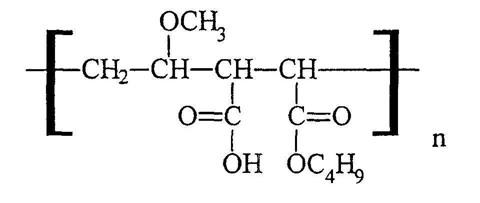 in isopropyl alcohol.

The retarder as a 50% solution in isopropyl alcohol was pre-mixed with the lime and the water, then the remaining components of the composition were mixed in using a high speed mixer to ensure that the mixture was homogeneous. The pH of the composition was 12.4. A portion of this mixture was then removed for shelf life testing. 4% by weight of the composition of a 1.1 M solution of aluminium sulphate was then added to the remainder of the mixture to accelerate hardening and setting of the mixture. The accelerator was hand mixed or drill mixed into the composition.

The portion of the composition that was removed for shelf life testing had not set ten months later. When the accelerator was hand mixed into the composition, the set time was 165 minutes. When the accelerator was drill mixed into the composition, the set time was 90 minutes. The composition was found to have excellent workability and surface properties, and when no accelerator was added to the ready mixed composition it was an excellent drying type joint compound.

### Example 4:

A ready mixed setting type joint compound was made as in example 3 but with the following formulation:

| | **weight %** |
|---|---|
| retarder (Gantrez ES-435, 50% in isopropyl alcohol) | 0.8 |
| cellulose ether | 0.3 |
| lime | 0.1 |
| calcium sulphate hemihydrate | 29.4 |
| perlite | 7.4 |
| limestone | 15.8 |
| wollastonite | 2.6 |
| kaolin | 2.6 |
| binder (ethylene vinyl acetate, 50% in water) | 4.2 |
| water | 36.8 |

The portion of the composition that was removed for shelf life testing had not set 10 months later.

### Example 5:

A ready mixed setting type joint compound was made as in example 3 but with the following formulation:

| | **weight %** |
|---|---|
| retarder (Gantrez ES-435, 50% in isopropyl alcohol) | 0.8 |
| cellulose ether | 0.3 |
| lime | 1.1 |
| calcium sulphate hemihydrate | 30.4 |
| perlite | 7.6 |
| limestone | 17.4 |
| wollastonite | 2.7 |
| kaolin | 2.7 |
| binder (ethylene vinyl acetate, 50% in water) | 4.3 |
| water | 32.7 |

The portion of the composition that was removed for shelf life testing had not set 2½ months later.

### Example 6:

A ready mixed setting type joint compound was made as in example 3 but with the following formulation:

| | **weight %** |
|---|---|
| retarder (Gantrez ES-435, 50% in isopropyl alcohol) | 0.8 |
| cellulose ether | 0.3 |
| lime | 1.0 |
| calcium sulphate hemihydrate | 28.8 |
| perlite | 7.2 |
| limestone | 16.4 |
| wollastonite | 2.6 |
| kaolin | 2.6 |
| attapulgite clay | 0.3 |
| binder (ethylene vinyl acetate, 50% in water) | 4.1 |
| water | 35.9 |

The portion of the composition that was removed for shelf life testing had not set 7 months later.

### Example 7:

A ready mixed setting type joint compound was made as in example 3 but with the following formulation:

| | **weight %** |
|---|---|
| retarder (Gantrez ES-435, 50% in isopropyl alcohol) | 0.7 |
| cellulose ether | 0.3 |
| lime | 0.1 |
| calcium sulphate hemihydrate | 28.1 |
| perlite | 7.0 |
| limestone | 16.1 |
| wollastonite | 2.5 |
| talc | 2.5 |
| binder (ethylene vinyl acetate, 50% in water) | 4.0 |
| water | 38.6 |

The portion of the composition that was removed for shelf life testing had not set 2 months later.

### Example 8:

A ready mixed setting type joint compound was made as in example 3 but with the following formulation:

| | **weight %** |
|---|---|
| retarder (Gantrez ES-435, 50% in isopropyl alcohol) | 0.8 |
| cellulose ether | 0.3 |
| lime | 0.1 |
| calcium sulphate hemihydrate | 27.7 |
| perlite | 7.2 |
| limestone | 18.9 |
| wollastonite | 2.6 |
| binder (ethylene vinyl acetate, 50% in water) | 4.1 |
| water | 38.4 |

The portion of the composition that was removed for shelf life testing had not set 1 month later.

### Example 9:

A ready mixed setting type joint compound was made as in example 3 but with the following formulation:

| | **weight %** |
|---|---|
| retarder (Gantrez ES-435, 50% in isopropyl alcohol) | 0.8 |
| cellulose ether | 0.3 |
| lime | 0.1 |
| calcium sulphate hemihydrate | 27.7 |
| perlite | 7.2 |
| limestone | 18.9 |
| kaolin | 2.6 |
| binder (ethylene vinyl acetate, 50% in water) | 4.1 |
| water | 38.4 |

The portion of the composition that was removed for shelf life testing had not set 1 month later.

### Example 10:

A ready mixed setting type joint compound was made as in example 3 but with the following formulation:

| | **weight %** |
|---|---|
| retarder (Gantrez ES-435, 50% in isopropyl alcohol) | 0.8 |
| cellulose ether | 0.3 |
| lime | 0.1 |
| calcium sulphate hemihydrate | 27.7 |
| perlite | 7.2 |
| kaolin | 2.6 |
| binder (ethylene vinyl acetate, 50% in water) | 4.1 |
| water | 38.4 |

The portion of the composition that was removed for shelf life testing had not set 1 month later.

### Example 11:

A ready mixed setting type joint compound was made as in example 3 but with the following formulation:

| | **weight %** |
|---|---|
| retarder (Gantrez ES-435, 50% in isopropyl alcohol) | 1.0 |
| cellulose ether | 0.3 |
| lime | 0.1 |
| calcium sulphate hemihydrate | 35.9 |
| perlite | 7.1 |
| limestone | 8.1 |
| wollastonite | 2.6 |
| kaolin | 2.6 |
| binder (ethylene vinyl acetate, 50% in water) | 4.1 |
| water | 38.3 |

The portion of the composition that was removed for shelf life testing had not set 1 month later.

### Example 12:

A ready mixed setting type joint compound was made as in example 3 but with the following formulation:

| | **weight %** |
|---|---|
| retarder (Gantrez ES-435, 50% in isopropyl alcohol) | 0.7 |
| cellulose ether | 0.3 |
| lime | 1.0 |
| ordinary Portland cement | 27.7 |
| perlite | 6.9 |
| limestone | 15.8 |
| wollastonite | 2.5 |
| kaolin | 2.5 |
| binder (ethylene vinyl acetate, 50% in water) | 4.0 |
| water | 38.6 |

The portion of the composition that was removed for shelf life testing had not set 1 week later.

### Example 13:

A ready mixed setting type joint compound was made as in example 3 but with the following formulation:

| | **weight %** |
|---|---|
| retarder (Gantrez ES-435, 50% in isopropyl alcohol) | 0.8 |
| retarder (Narlex D72) | 0.03 |
| cellulose ether | 0.3 |
| lime | 0.9 |
| calcium sulphate hemihydrate | 26.2 |
| perlite | 6.5 |
| limestone | 15.0 |
| wollastonite | 2.3 |
| kaolin | 2.3 |
| binder (ethylene vinyl acetate, 50% in water) | 3.7 |
| water | 42.0 |

The portion of the composition that was removed for shelf life testing had not set 3 months later.

Setting type ready mixed joint compound compositions according to the invention have been found to have a long shelf life, excellent workability after the accelerator is added until hardening takes place, short setting times so that the length of time required between application of successive coats is reduced compared to drying type joint compounds and are not prone to shrinkage. Compositions according to the invention may also be used as drying type joint compounds if the ready mixed composition is applied without being combined with an accelerator. When compositions according to the invention are used as drying type joint compounds, the drying times are short.

## Claims

1. A ready mixed cementitious composition which sets when mixed with an effective amount of a setting accelerator comprising a mixture of: a cementitious material; a binder; water; and a retarder comprising a polymer or a copolymer of a monomer of the formula; 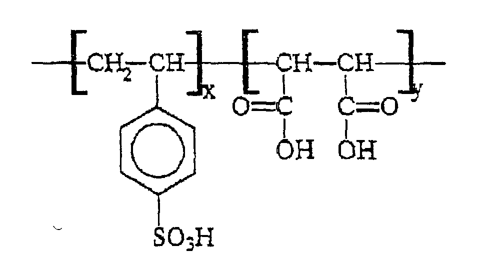 where x and y are integers and may be the same or different or an ionised form thereof.

2. A ready mixed cementitious composition which sets when mixed with an effective amount of a setting accelerator comprising a mixture of: a cementitious material; water; and a retarder comprising a rosin modified maleic anhydride polymer or copolymer or an ionised form thereof.

3. A composition according to claim 2 in which the polymer or copolymer is dissolved in isopropyl alcohol.

4. A ready-mixed cementitious composition which sets when mixed with an effective amount of a setting accelerator, the composition comprising a mixture of: a cementitious material; water; and a retarder comprising a polymer or copolymer of a monomer having the formula: 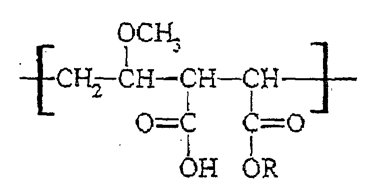 wherein R is C₄H₉ or (CH₃)₂CH or an ionised form thereof.

5. A composition according to claim 4 wherein R is C₄H₉.

6. A composition according to claim 5 or 6 in which the polymer is present in the composition in an amount of about 1.4% by weight of the cementitious material in the composition.

7. A composition according to any of claims 4 to 6 in which the polymer or copolymer is dissolved in isopropyl alcohol.

8. A ready mixed cementitious composition which sets when mixed with an effective amount of a setting accelerator, the composition comprising:
a calcium sulphate hemihydrate; water; and a retarder comprising 0.09 to 0.1% by weight plaster of a polymer or copolymer of a monomer having the formula: 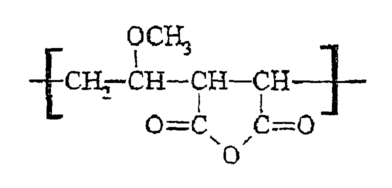 and having a molecular weight in the range of about 110 000 to about 140 000 or an ionised form thereof.

9. A composition according to any of claims 2 to 8 further comprising a binder.

10. A composition according to claim 1 or 9 in which the binder is a polymeric binder and comprises at least one of acrylic, styrene acrylic, styrene butadiene, vinyl acetate and ethylene vinyl acetate.

11. A composition according to claim 10 in which the binder comprises ethylene vinyl acetate.

12. A composition according to claim 1, 9, 10 or 11 in which the binder is present in the composition in an amount of about 1% to about 10% by weight of the composition.

13. A composition according to any of claims 1 and 9 to 12 in which the binder is present in the composition in an amount of about 1% to about 7% by weight of the composition.

14. A composition according to claim 13 in which the binder is present in the composition in an amount of about 4% by weight of the composition.

15. A composition according to any of claims 1 to 7 or according to any of claims 9 to 14 when dependent from any of claims 2 to 7 in which the cementitious material is a calcium sulphate hemihydrate.

16. A composition according to claim 8 or 15 in which the calcium sulphate hemihydrate is alpha calcium sulphate hemihydrate.

17. A composition according to claim 8, 15 or 16 in which the calcium sulphate hemihydrate is present in the composition in an amount of about 5% to about 50% by weight of the composition.

18. A composition according to claim 17 in which the calcium sulphare hemihydrate is present in the composition in an amount of about 30% by weight of the composition.

19. A composition according to any preceding claim having a pH of at least 7.

20. A composition according to any preceding claim in which the polymer is present in the composition in an amount of about 0.5% to about 5% by weight of the cementitious material in the composition.

21. A composition according to any preceding claim in which the polymer is present in the composition in an amount of about 1.4% by weight of the cementitious material in the composition.

22. A composition according to any preceding claim further comprising a thickener.

23. A composition according to claim 22 in which the thickener comprises at least one of cellulose ether, modified cellulose ether, starch, gum arabic, acrylic, urethane and polyvinyl alcohol.

24. A composition according to claim 22 or 23 in which the thickener comprises cellulose ether.

25. A composition according to claim 22, 23 or 24 in which the thickener is present in the composition in an amount of about 0.05% to about 5% by weight of the composition.

26. A composition according to any of claims 22 to 25 in which the thickener is present in the composition in an amount of about 0.3% by weight of the composition.

27. A composition according to any preceding claim further comprising a filler.

28. A composition according to claim 27 in which the filler comprises at least one of perlite, limestone, celite, dolomite, silica, talc, vermiculite, kaolin, wollastonite, glass microspheres and polymer microspheres.

29. A composition according to claim 27 or 28 in which the filler comprises at least one of perlite, limestone and celite.

30. A composition according to claim 28 or 29 in which perlite is present in an amount of no more than 12% by weight of the solids of the composition.

31. A composition according to claim 27, 28, 29 or 30 in which the filler is present in the composition in an amount of about 10% to about 20% by weight of the composition.

32. A composition according to any preceding claim further comprising a non levelling agent.

33. A composition according to claim 32 in which the non levelling agent comprises at least one of silicas and clays.

34. A composition according to any preceding claim further comprising a preservative.

35. A composition according to claim 34 in which the preservative comprises at least one of formaldehyde and an isothiazolone.

36. A method of preparing a ready mixed cementitious composition according to any preceding claim comprising mixing together the components of the composition.

37. A ready mixed coating system comprising separate first and second components, the first component comprising a composition according to any of claims 1 to 35 and the second component comprising a setting accelerator which when mixed with the cementitious composition induces the cementitious composition to set.

38. A system according to claim 37 in which the accelerator comprises at least one of aluminium sulphate, zinc sulphate and iron sulphate.

39. A ready mixed coating system comprising separate first and second components, the first component comprising a ready mixed cementitious composition which sets when mixed with an effective amount of a setting accelerator, the cementitious composition comprising a mixture of: a cementitious material; water; and a retarder comprising a polymer or a copolymer of a monomer of the formula: 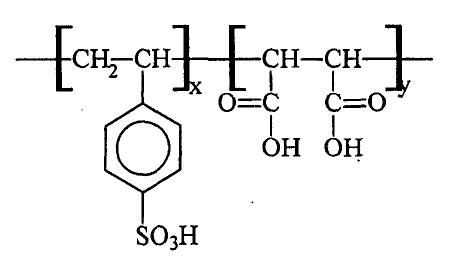 where x and y are integers and may be the same or different or an ionised form thereof and the second component comprising a setting accelerator which when mixed with the cementitious composition induces the cementitious composition to set, the accelerator comprising at least one of aluminium sulphate, zinc sulphate and iron sulphate.

40. A system according to claim 39 in which the cementitious material of the first component is a calcium sulphate hemihydrate.

41. A system according to claim 40 in which the calcium sulphate hemihydrate is alpha calcium sulphate hemihydrate.

42. A system according to claim 40 or 41 in which the calcium sulphate hemihydrate is present in the component in an amount of about 5% to about 50% by weight of the composition.

43. A system according to claim 42 in which the calcium sulphate hemihydrate is present in the first component in an amount of about 30% by weight of the composition.

44. A system according to of claims 39 to 43 in which the first component has a pH of at least 7.

45. A system according to any of claims 39 to 44 in which the polymer is present in the first component in an amount of about 0.5% to about 5% by weight of the cementitious material in the first component.

46. A system according to claim 45 in which the polymer is present in the first component in an amount of about 1.4% by weight of the cementitious material in the first component.

47. A system according to any of claims 39 to 46 in which the first component further comprises a thickener.

48. A system according to claim 47 in which the thickener comprises at least one of cellulose ether, modified cellulose ether, starch, gum arabic, acrylic, urethane and polyvinyl alcohol.

49. A system according to claim 47 or 48 in which the thickener comprises cellulose ether.

50. A system according to claim 47, 48 or 49 in which the thickener is present in the first component in an amount of about 0.05% to about 5% by weight of the composition.

51. A system according to any of claims 47 to 50 in which the thickener is present in the first component in an amount of about 0.3% by weight of the first component.

52. A system according to any of claims 39 to 51 in which the first component further comprises a filler.

53. A system according to claim 52 in which the filler comprises at least one of perlite, limestone, celite, dolomite, silica, talc, vermiculite, kaolin, wollastonite, glass microspheres and polymer microspheres.

54. A system according to claim 52 or 53 in which the filler comprises at least one of perlite, limestone and celite.

55. A system according to claim 53 or 54 in which perlite is present in an amount of no more than 12% by weight of the solids of the first component.

56. A system according to claim 52, 53, 54 or 55 in which the filler is present in the composition in an amount of about 10% to about 20% by weight of the composition.

57. A system according to any of claims 40 to 56 in which the first component further comprises a non levelling agent.

58. A system according to claim 57 in which the non levelling agent comprises at least one of silicas and clays.

59. A system according to any of claims 39 to 58 in which the first component further comprises a preservative.

60. A system according to claim 59 in which the preservative comprises at least one of formaldehyde and an isothiazolone.

61. A system according to any of claims 39 to 60 the first component of which does not set for at least ten months after formulation.

62. A system according to any of claims 37 to 61 in which the accelerator comprises aluminium sulphate.

63. A system according to any of claims 37 to 62 in which the accelerator is in the form of a powder.

64. A system according to any of claims 37 to 62 in which the accelerator is in the form of a paste.

65. A system according to any of claims 37 to 62 in which the accelerator is in an aqueous solution.

66. A system according to any of claims 37 to 65 in which the accelerator is present in an amount of from about 0.1% to about 5% by weight of the total composition.

67. A system according to claim 66 in which the accelerator is present in the composition in an amount of about 2% by weight of the composition.

68. A method for preparing a setting cementitious composition comprising admixing the first and second components of any of claims 37 to 67.

69. A method according to claim 68 in which the step of admixing the first and second components comprises:
separately coating the first and second components onto respective surfaces; and
bringing the respective surfaces together so that the first and second components mix at the interface between the components.

## Patentansprüche

1. Vorgemischte zementartige Zusammensetzung, die abbindet, wenn sie mit einer wirksamen Menge eines Abbindebeschleunigers gemischt wird, umfassend ein Gemisch aus: zementartigem Material, Bindemittel, Wasser und einem Retarder, umfassend ein Polymer oder ein Copolymer eines Monomers der folgenden Formel: 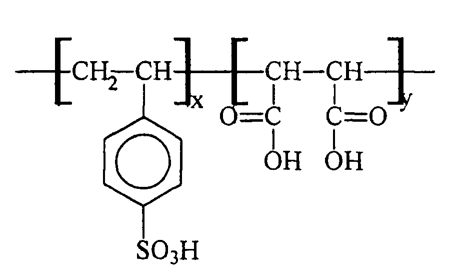 wobei x und y ganze Zahlen sind und gleich oder unterschiedlich sein können, oder eine ionisierte Form davon.

2. Vorgemischte zementartige Zusammensetzung, die abbindet, wenn sie mit einer wirksamen Menge eines Abbindebeschleunigers gemischt wird, umfassend ein Gemisch aus: zementartigem Material, Wasser, Retarder, umfassend ein mit Kolophonium modifiziertes Maleinsäureanhydrid-Polymer oder -Copolymer, oder eine ionisierte Form davon.

3. Zusammensetzung nach Anspruch 2, bei der das Polymer oder Copolymer in Isopropylalkohol aufgelöst ist.

4. Vorgemischte zementartige Zusammensetzung, die abbindet, wenn sie mit einer wirksamen Menge eines Abbindebeschleunigers gemischt wird, wobei die Zusammensetzung ein Gemisch umfasst aus: einem zementartigen Material, Wasser und einem Retarder, umfassend ein Polymer oder Copolymer eines Monomers mit der Formel: 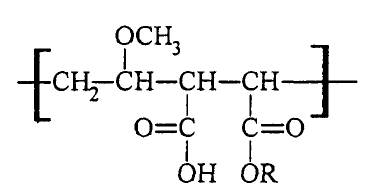 wobei R C₄H₉ oder (CH₃) ₂CH ist, oder eine ionisierte Form davon.

5. Zusammensetzung nach Anspruch 4, wobei R C₄H₉ ist.

6. Zusammensetzung nach Anspruch 5 oder 6, bei der das Polymer in der Zusammensetzung in einer Menge von etwa 1,4 Gew.-% des zementartigen Materials in der Zusammensetzung vorliegt.

7. Zusammensetzung nach einem der Ansprüche 4 bis 6, bei der das Polymer oder Copolymer in Isopropylalkohol aufgelöst ist.

8. Vorgemischte zementartige Zusammensetzung, die abbindet, wenn sie mit einer wirksamen Menge eines Abbindebeschleunigers gemischt wird, wobei die Zusammensetzung Folgendes umfasst:
ein Calciumsulfathalbhydrat, Wasser und einen Retarder, umfassend 0,09 bis 0,1 Gew.-% Putzmörtel aus einem Polymer oder Copolymer eines Monomers mit der Formel: 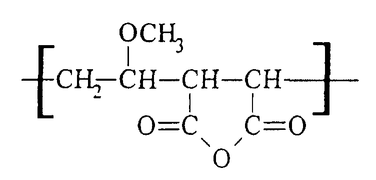 und mit einer relativen Molekulmasse im Bereich von etwa 110.000 bis etwa 140.000, oder eine ionisierte Form davon.

9. Zusammensetzung nach einem der Ansprüche 2 bis 8, ferner umfassend ein Bindemittel.

10. Zusammensetzung nach Anspruch 1 oder 9, bei der das Bindemittel ein polymeres Bindemittel ist und Acryl, Styrenacryl, Styrenbutadien, Vinylacetat und/oder Ethylenvinylacetat umfasst.

11. Zusammensetzung nach Anspruch 10, bei der das Bindemittel Ethylenvinylacetat umfasst.

12. Zusammensetzung nach Anspruch 1, 9, 10 oder 11, bei der das Bindemittel in der Zusammensetzung in einer Menge von etwa 1 bis etwa 10 Gew.-% der Zusammensetzung vorliegt.

13. Zusammensetzung nach einem der Ansprüche 1 und 9 bis 12, bei der das Bindemittel in der Zusammensetzung in einer Menge von etwa 1 bis etwa 7 Gew.-% der Zusammensetzung vorliegt.

14. Zusammensetzung nach Anspruch 13, bei der das Bindemittel in der Zusammensetzung in einer Menge von etwa 4 Gew.-% der Zusammensetzung vorliegt.

15. Zusammensetzung nach einem der Ansprüche 1 bis 7 oder nach einem der Ansprüche 9 bis 14 in Abhängigkeit von einem der Ansprüche 2 bis 7, in der das zementartige Material Calciumsulfathalbhydrat ist.

16. Zusammensetzung nach Anspruch 8 oder 15, bei der das Calciumsulfathalbhydrat Alpha-Calciumsulfathalbhydrat ist.

17. Zusammensetzung nach Anspruch 8, 15 oder 16, bei der das Calciumsulfathalbhydrat in der Zusammensetzung in einer Menge von etwa 5 bis etwa 50 Gew.-% der Zusammensetzung vorliegt.

18. Zusammensetzung nach Anspruch 17, bei der das Calciumsulfathalbhydrat in der Zusammensetzung in einer Menge von etwa 30 Gew.-% der Zusammensetzung vorliegt.

19. Zusammensetzung nach einem der vorherigen Ansprüche mit einem pH-Wert von wenigstens 7.

20. Zusammensetzung nach einem der vorherigen Ansprüche, bei der das Polymer in der Zusammensetzung in einer Menge von etwa 0,5 bis etwa 5 Gew.-% des zementartigen Materials in der Zusammensetzung vorliegt.

21. Zusammensetzung nach einem der vorherigen Ansprüche, bei der das Polymer in der Zusammensetzung in einer Menge von etwa 1,4 Gew.-% des zementartigen Materials in der Zusammensetzung vorliegt.

22. Zusammensetzung nach einem der vorherigen Ansprüche, ferner umfassend ein Verdickungsmittel.

23. Zusammensetzung nach Anspruch 22, bei der das Verdickungsmittel Celluloseether, modifizierten Celluloseether, Stärke, Gummiarabikum, Acryl, Urethan und/oder Polyvinylalkohol umfasst.

24. Zusammensetzung nach Anspruch 22 oder 23, bei der das Verdickungsmittel Celluloseether umfasst.

25. Zusammensetzung nach Anspruch 22, 23 oder 24, bei der das Verdickungsmittel in der Zusammensetzung in einer Menge von etwa 0,05 bis etwa 5 Gew.-% der Zusammensetzung vorliegt.

26. Zusammensetzung nach einem der Ansprüche 22 bis 25, in der das Verdickungsmittel in der Zusammensetzung in einer Menge von etwa 0,3 Gew.-% der Zusammensetzung vorliegt.

27. Zusammensetzung nach einem der vorherigen Ansprüche, ferner umfassend einen Füllstoff.

28. Zusammensetzung nach Anspruch 27, bei der der Füllstoff Perlit, Kalkstein, Kieselgur, Dolomit, Silika, Talk, Vermiculit, Kaolin, Wollastonit, Glasmikrosphären und/oder Polymermikrosphären umfasst.

29. Zusammensetzung nach Anspruch 27 oder 28, bei der der Füllstoff Perlit, Kalkstein und/oder Kieselgur umfasst.

30. Zusammensetzung nach Anspruch 28 oder 29, bei der das Perlit in einer Menge von nicht mehr als 12 Gew.-% der Feststoffe der Zusammensetzung vorliegt.

31. Zusammensetzung nach Anspruch 27, 28, 29 oder 30, in der der Füllstoff in der Zusammensetzung in einer Menge von etwa 10 bis etwa 20 Gew.-% der Zusammensetzung vorliegt.

32. Zusammensetzung nach einem der vorherigen Ansprüche, ferner umfassend ein Nichtegalisierungsmittel.

33. Zusammensetzung nach Anspruch 32, bei der das Nichtegalisierungsmittel Silika und/oder Tone umfasst.

34. Zusammensetzung nach einem der vorherigen Ansprüche, ferner umfassend ein Konservierungsmittel.

35. Zusammensetzung nach Anspruch 34, bei der das Konservierungsmittel Formaldehyd und/oder ein Isothiazolon umfasst.

36. Verfahren zur Herstellung einer vorgemischten zementartigen Zusammensetzung nach einem der vorherigen Ansprüche, umfassend das Vermischen der Komponenten der Zusammensetzung miteinander.

37. Vorgemischtes Beschichtungssystem, umfassend separate erste und zweite Komponenten, wobei die erste Komponente eine Zusammensetzung nach einem der Ansprüche 1 bis 35 und die zweite Komponente einen Abbindebeschleuniger umfasst, der, wenn er mit der zementartigen Zusammensetzung vermischt ist, die zementartige Zusammensetzung zum Abbinden bringt.

38. System nach Anspruch 37, bei dem der Beschleuniger Aluminiumsulfat, Zinksulfat und/oder Eisensulfat umfasst.

39. Vorgemischtes Beschichtungssystem, umfassend separate erste und zweite Komponenten, wobei die erste Komponente eine vorgemischte zementartige Zusammensetzung umfasst, die abbindet, wenn sie mit einer wirksamen Menge eines Abbindebeschleunigers gemischt wird, wobei die zementartige Zusammensetzung ein Gemisch umfasst aus: zementartigem Material, Wasser und einem Retarder, umfassend ein Polymer oder Copolymer eines Monomers der Formel: 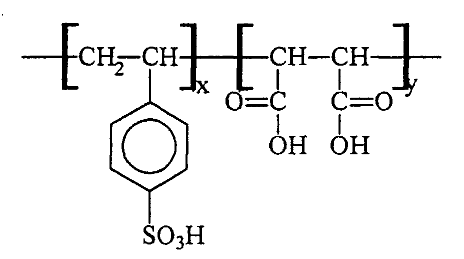 wobei x und y ganze Zahlen sind und gleich oder unterschiedlich sein können, oder eine ionisierte Form davon, und wobei die zweite Komponente einen Abbindebeschleuniger umfasst, der, wenn er mit der zementartigen Zusammensetzung gemischt wird, die zementartige Zusammensetzung zum Abbinden bringt, wobei der Beschleuniger Aluminiumsulfat, Zinksulfat und/oder Eisensulfat umfasst.

40. System nach Anspruch 39, bei dem das zementartige Material der ersten Komponente ein Calciumsulfathalbhydrat ist.

41. System nach Anspruch 40, bei dem das Calciumsulfathalbhydrat Alpha-Calciumsulfathalbhydrat ist.

42. System nach Anspruch 40 oder 41, bei dem das Calciumsulfathalbhydrat in der Komponente in einer Menge von etwa 5 bis etwa 50 Gew.-% der Zusammensetzung vorliegt.

43. System nach Anspruch 42, bei dem das Calciumsulfathalbhydrat in der ersten Komponente in einer Menge von etwa 30 Gew.-% der Zusammensetzung vorliegt.

44. System nach einem der Ansprüche 39 bis 43, bei dem die erste Komponente einen pH-Wert von wenigstens 7 hat.

45. System nach einem der Ansprüche 39 bis 44, bei dem das Polymer in der ersten Komponente in einer Menge von etwa 0,5 bis etwa 5 Gew.-% des zementartigen Materials in der ersten Komponente vorliegt.

46. System nach Anspruch 45, bei dem das Polymer in der ersten Komponente in einer Menge von etwa 1,4 Gew.-% des zementartigen Materials in der ersten Komponente vorliegt.

47. System nach einem der Ansprüche 39 bis 46, bei dem die erste Komponente ferner ein Verdickungsmittel umfasst.

48. System nach Anspruch 47, bei dem das Verdickungsmittel Celluloseether, modifizierten Celluloseether, Stärke, Gummiarabikum, Acryl, Urethan und/oder Polyvinylalkohol umfasst.

49. System nach Anspruch 47 oder 48, bei dem das Verdickungsmittel Celluloseether umfasst.

50. System nach Anspruch 47, 48 oder 49, bei dem das Verdickungsmittel in der ersten Komponente in einer Menge von etwa 0,05 bis etwa 5 Gew.-% der Zusammensetzung vorliegt.

51. System nach einem der Ansprüche 47 bis 50, bei dem das Verdickungsmittel in der ersten Komponente in einer Menge von etwa 0,3 Gew.-% der ersten Komponente vorliegt.

52. System nach einem der Ansprüche 39 bis 51, bei dem die erste Komponente ferner einen Füllstoff umfasst.

53. System nach Anspruch 52, bei dem der Füllstoff Perlit, Kalkstein, Kieselgur, Dolomit, Silika, Talk, Vermiculit, Kaolin, Wollastonit, Glasmikrosphären und/oder Polymermikrosphären umfasst.

54. System nach Anspruch 52 oder 53, bei dem der Füllstoff Perlit, Kalkstein und/oder Kieselgur umfasst.

55. System nach Anspruch 53 oder 54, bei dem das Perlit in einer Menge von nicht mehr als 12 Gew.-% der Feststoffe der ersten Komponente vorliegt.

56. System nach Anspruch 52, 53, 54 oder 55, bei dem der Füllstoff in der Zusammensetzung in einer Menge von etwa 10 bis etwa 20 Gew.-% der Zusammensetzung vorliegt.

57. System nach einem der Ansprüche 40 bis 56, bei dem die erste Komponente ferner ein Nichtegalisierungsmittel umfasst.

58. System nach Anspruch 57, bei dem das Nichtegalisierungsmittel Silika und/oder Tone umfasst.

59. System nach einem der Ansprüche 39 bis 58, bei dem die erste Komponente ferner ein Konservierungsmittel umfasst.

60. System nach Anspruch 59, bei dem das Konservierungsmittel Formaldehyd und/oder ein Isothiazolon umfasst.

61. System nach einem der Ansprüche 39 bis 60, dessen erste Komponente wenigstens zehn Monate nach der Formulierung nicht abbindet.

62. System nach einem der Ansprüche 37 bis 61, bei dem der Beschleuniger Aluminiumsulfat umfasst.

63. System nach einem der Ansprüche 37 bis 62, bei dem der Beschleuniger in der Form eines Pulvers vorliegt.

64. System nach einem der Ansprüche 37 bis 62, bei dem der Beschleuniger in der Form einer Paste vorliegt.

65. System nach einem der Ansprüche 37 bis 62, bei dem der Beschleuniger in einer wässrigen Lösung vorliegt.

66. System nach einem der Ansprüche 37 bis 65, bei dem der Beschleuniger in einer Menge von etwa 0,1 bis etwa 5 Gew.-% der Gesamtzusammensetzung vorliegt.

67. System nach Anspruch 66, bei dem der Beschleuniger in der Zusammensetzung in einer Menge von etwa 2 Gew.-% der Zusammensetzung vorliegt.

68. Verfahren zur Herstellung einer abbindenden zementartigen Zusammensetzung, umfassend das Vermischen der ersten und zweiten Komponente nach einem der Ansprüche 37 bis 67.

69. Verfahren nach Anspruch 68, bei dem der Schritt des Vermischens der ersten und zweiten Komponenten Folgendes umfasst:
separates Beschichten der jeweiligen Oberflächen mit der ersten und der zweiten Komponente; und
Zusammenbringen der jeweiligen Oberflächen, so dass die erste und die zweite Komponente sich an der Grenzfläche zwischen den Komponenten vermischen.

## Revendications

1. Composition cimentaire prête à l'emploi qui prend lorsque mélangée avec une quantité efficace d'un accélérateur de prise comprenant un mélange : d'un matériau cimentaire; d'un liant; d'eau; et d'un retardateur comprenant un polymère ou copolymère d'un monomère de la formule : 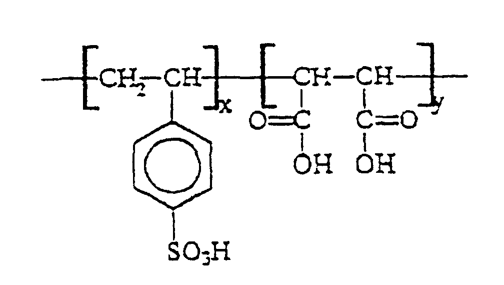 où x et y sont des entiers et peuvent être les mêmes ou différents ou une forme ionisée de ceux-ci.

2. Composition cimentaire prête à l'emploi qui prend lorsque mélangée avec une quantité efficace d'un accélérateur de prise comprenant un mélange : d'un matériau cimentaire; d'eau; et d'un retardateur comprenant un polymère ou copolymère d'anhydride maléique modifié par de la colophane ou une forme ionisée de celui-ci.

3. Composition selon la revendication 2, dans laquelle le polymère ou copolymère est dissous dans de l'alcool isopropylique.

4. Composition cimentaire prête à l'emploi qui prend lorsque mélangée avec une quantité efficace d'un accélérateur de prise, la composition comprenant un mélange : d'un matériau cimentaire; d'eau; et d'un retardateur comprenant un polymère ou un polymère d'un monomère ayant la formule : 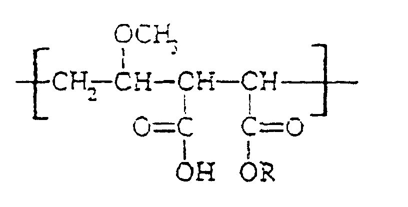 où R est C₄H₉ ou (CH₃)₂CH ou une forme ionisée de celui-ci.

5. Composition selon la revendication 4 dans laquelle H est C₄H₉.

6. Composition selon la revendication 5 ou 6, dans laquelle le polymère est présent dans la composition en une quantité d'environ 1,4% en poids du matériau cimentaire dans la composition.

7. Composition selon l'une quelconque des revendications 4 à 6, dans laquelle le polymère ou copolymère est dissous dans de l'alcool isopropylique.

8. Composition cimentaire prête à l'emploi qui prend lorsque mélangée avec une quantité efficace d'un accélérateur de prise, la composition comprenant : un semi-hydrate de sulfate de calcium; de l'eau; et un retardateur comprenant 0,09 à 0,1% en poids de plâtre d'un polymère ou copolymère d'un monomère ayant la formule : 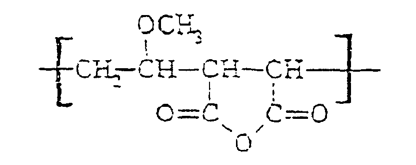 et ayant un poids moléculaire dans la gamme d'environ 110 000 à environ 140 000 ou une forme ionisée de celui-ci.

9. Composition selon l'une quelconque des revendications 2 à 8 comprenant en outre un liant.

10. Composition selon la revendication 1 ou 9, dans laquelle le liant est un liant polymère et comprend au moins l'un de l'acrylique, du styrène acrylique, du styrène butadiène, de l'acétate de vinyle et de l'éthylène acétate de vinyle.

11. Composition selon la revendication 10, dans laquelle le liant comprend de l'éthylène acétate de vinyle.

12. Composition selon la revendication 1, 9, 10 ou 11, dans laquelle le liant est présent dans la composition en une quantité d'environ 1% à environ 10% en poids de la composition.

13. Composition selon l'une quelconque des revendications 1 et 9 à 12, dans laquelle le liant est présent dans la composition en une quantité d'environ 1% à environ 7% en poids de la composition.

14. Composition selon la revendication 13, dans laquelle le liant est présent dans la composition en une quantité d'environ 4% en poids de la composition.

15. Composition selon l'une quelconque des revendications 1 à 7 ou selon l'une quelconque des revendications 9 à 14 lorsque dépendantes de l'une quelconque des revendications 2 à 7, dans laquelle le matériau cimentaire est un semi-hydrate de sulfate de calcium.

16. Composition selon la revendication 8 ou 15, dans laquelle le semi-hydrate de sulfate de calcium est un semi-hydrate de sulfate de calcium alpha.

17. Composition selon la revendication 8, 15 ou 16, dans laquelle le semi-hydrate de sulfate de calcium est présent dans la composition en une quantité d'environ 5% à environ 50% en poids de la composition.

18. Composition selon la revendication 17, dans laquelle le semi-hydrate de sulfate de calcium est présent dans la composition en une quantité d'environ 30% en poids de la composition.

19. Composition selon l'une quelconque des revendications précédentes ayant un pH d'au moins 7.

20. Composition selon l'une quelconque des revendications précédentes, dans laquelle le polymère est présent dans la composition en une quantité d'environ 0,5% à environ 5% en poids du matériau cimentaire dans la composition.

21. Composition selon l'une quelconque des revendications précédentes, dans laquelle le polymère est présent dans la composition en une quantité d'environ 1,4% en poids du matériau cimentaire dans la composition.

22. Composition selon l'une quelconque des revendications précédentes comprenant un épaississeur.

23. Composition selon la revendication 22, dans laquelle l'épaississeur comprend au moins l'un de l'éther cellulosique, de l'éther cellulosique modifié, de l'amidon, de la gomme arabique, de l'acrylique, de l'uréthane et de l'alcool polyvinylique.

24. Composition selon la revendication 22 ou 23, dans laquelle l'épaississeur comprend de l'éther cellulosique.

25. Composition selon la revendication 22, 23 ou 24, dans laquelle l'épaississeur est présent dans la composition en une quantité d'environ 0,05% à environ 5% en poids de la composition.

26. Composition selon l'une quelconque des revendications 22 à 25, dans laquelle l'épaississeur est présent dans la composition en une quantité d'environ 0,3% en poids de la composition.

27. Composition selon l'une quelconque des revendications précédentes comprenant en outre une matière de remplissage.

28. Composition selon la revendication 27, dans laquelle la matière de remplissage comprend au moins l'un de la perlite, du calcaire, de la diatomite, de la dolomite, de la silice, du talc, de la vermiculite, du kaolin, de la wollastonite, de microsphères de verre et de microsphères de polymère.

29. Composition selon la revendication 27 ou 28, dans laquelle la matière de remplissage comprend au moins l'un de la perlite, du calcaire et de la diatomite.

30. Composition selon la revendication 28 ou 29, dans laquelle la perlite est présente en une quantité de pas plus de 12% en poids des solides de la composition.

31. Composition selon la revendication 27, 28, 29 ou 30, dans laquelle la matière de remplissage est présente dans la composition en une quantité d'environ 10% à environ 20% en poids de la composition.

32. Composition selon l'une quelconque des revendications précédentes, comprenant en outre un agent non égalisant.

33. Composition selon la revendication 32, dans laquelle l'agent non égalisant comprend au moins l'une des silices et argiles.

34. Composition selon l'une quelconque des revendications précédentes, comprenant en outre un préservateur.

35. Composition selon la revendication 34, dans laquelle le préservateur comprend au moins l'un du formaldéhyde et d'un isothiazolone.

36. Méthode pour préparer une composition cimentaire prête à l'emploi selon l'une quelconque des revendications précédentes, comprenant mélanger ensemble les composants de la composition.

37. Système de revêtement prêt à l'emploi comprenant des premier et deuxième composants séparés, le premier composant comprenant une composition selon l'une quelconque des revendications 1 à 35 et le deuxième composant comprenant un accélérateur de prise qui, lorsque mélangé avec la composition cimentaire, fait prendre la composition cimentaire.

38. Système selon la revendication 37, dans lequel l'accélérateur comprend au moins l'un de sulfate d'aluminium, sulfate de zinc et sulfate de fer.

39. Système de revêtement prêt à l'emploi comprenant des premier et deuxième composants séparés, le premier composant comprenant une composition cimentaire prête à l'emploi qui prend lorsque mélangée avec une quantité efficace d'un accélérateur de prise, la composition cimentaire comprenant un mélange : d'un matériau cimentaire; d'eau; et d'un retardateur comprenant un polymère ou un copolymère d'un monomère de la formule: 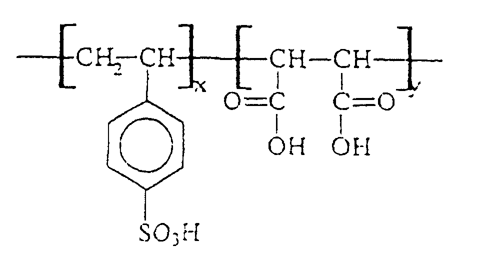 où x et y sont des entiers et peuvent être les mêmes ou différents ou une forme ionisée de ceux-ci et le deuxième composant comprend un accélérateur de prise qui, lorsque mélangé à la composition cimentaire, fait prendre la composition cimentaire, l'accélérateur de prise comprenant au moins l'un de sulfate d'aluminium, de sulfate de zinc et de sulfate de fer.

40. Système selon la revendication 39, dans lequel le matériau cimentaire du premier composant est un semi-hydrate de sulfate de calcium.

41. Système selon la revendication 40, dans lequel le semi-hydrate de sulfate de calcium est un semi-hydrate de sulfate de calcium alpha.

42. Système selon la revendication 40 ou 41, dans lequel le semi-hydrate de sulfate de calcium est présent dans le composant en une quantité d'environ 5% à environ 50% en poids de la composition.

43. Système selon la revendication 42, dans lequel le semi-hydrate de sulfate de calcium est présent dans le premier composant en une quantité d'environ 30% en poids de la composition.

44. Système selon les revendications 39 à 43, dans lequel le premier composant a un pH d'au moins 7.

45. Système selon l'une quelconque des revendications 39 à 44, dans lequel le polymère est présent dans le premier composant en une quantité d'environ 0,5% à environ 5% en poids du matériau cimentaire dans le premier composant.

46. Système selon la revendication 45, dans lequel le polymère est présent dans le premier composant en une quantité d'environ 1,4% en poids du matériau cimentaire dans le premier composant.

47. Système selon l'une quelconque des revendications 39 à 46, dans lequel le premier composant comprend en outre un épaississeur.

48. Système selon la revendication 47, dans lequel l'épaississeur comprend au moins l'un de l'éther cellulosique, de l'éther cellulosique modifié, de l'amidon, de la gomme arabique, de l'acrylique, de l'uréthane et de l'alcool polyvinylique.

49. Système selon la revendication 47 ou 48, dans lequel l'épaississeur comprend de l'éther cellulosique.

50. Système selon la revendication 47, 48 ou 49, dans lequel l'épaississeur est présent dans le premier composant en une quantité d'environ 0,05% à environ 5% en poids de la composition.

51. Système selon l'une quelconque des revendications 47 à 50, dans lequel l'épaississeur est présent dans le premier composant en une quantité d'environ 0,3% en poids du premier composant.

52. Système selon l'une quelconque des revendications 39 à 51, dans lequel le premier composant comprend en outre une matière de remplissage.

53. Système selon la revendication 52, dans laquelle la matière de remplissage comprend au moins l'un de la perlite, du calcaire, de la diatomite, de la dolomite, de la silice, du talc, de la vermiculite, du kaolin, de la wollastonite, de microsphères de verre et de microsphères de polymère.

54. Système selon la revendication 52 ou 53, dans lequel la matière de remplissage comprend au moins l'un de la perlite, du calcaire et de la diatomite.

55. Système selon la revendication 53 ou 54, dans lequel la perlite est présente en une quantité de pas plus de 12% en poids des solides du premier composant.

56. Système selon la revendication 52, 53, 54 ou 55, dans lequel la matière de remplissage est présente dans la composition en une quantité d'environ 10% à environ 20% en poids de la composition.

57. Système selon l'une quelconque des revendications 40 à 56, dans lequel le premier composant comprend en outre un agent non égalisant.

58. Système selon la revendication 57, dans lequel l'agent non égalisant comprend au moins l'une des silices et argiles.

59. Système selon l'une quelconque des revendications 39 à 58, dans lequel le premier composant comprend en outre un préservateur.

60. Système selon la revendication 59, dans lequel le préservateur comprend au moins l'un du formaldéhyde et d'un isothiazolone.

61. Système selon l'une quelconque des revendications 39 à 60, dont le premier composant ne prend pas pendant dix mois au moins suite à la formulation.

62. Système selon l'une quelconque des revendications 37 à 61, dans lequel l'accélérateur comprend du sulfate d'aluminium.

63. Système selon l'une quelconque des revendications 37 à 62, dans lequel l'accélérateur est sous forme d'une poudre.

64. Système selon lune quelconque des revendications 37 à 62, dans lequel l'accélérateur est sous forme d'une pâte.

65. Système selon l'une quelconque des revendications 37 à 62, dans lequel l'accélérateur est en une solution aqueuse.

66. Système selon l'une quelconque des revendications 37 à 65, dans lequel l'accélérateur est présent en une quantité d'environ 0,1% à environ 5% en poids de la composition totale.

67. Système selon la revendication 66, dans lequel l'accélérateur est présent dans la composition en une quantité d'environ 2% en poids de la composition.

68. Méthode pour préparer une composition cimentaire qui prend, comprenant mélanger des premier et deuxième composants de l'une quelconque des revendications 37 à 67.

69. Méthode selon la revendication 68, dans laquelle l'étape consistant à mélanger les premier et deuxième composants comprend :
enduire les surfaces respectives avec les premier et deuxième composants séparément; et
réunir les surfaces respectives de sorte que les premier et deuxième composants se mélangent à l'interface entre les composants.
